# FASCICULE DE BREVET EUROPEEN

(11) **EP 3 580 500 B1**
(45) Date de publication et mention de la délivrance du brevet: **11.08.2021**
(21) Numéro de dépôt: 18710509.3
(22) Date de dépôt: 08.02.2018
(51) Int. Cl.: F24F 13/14, B60H 1/00

(54) **VOLET D'OBTURATION ET INSTALLATION DE CHAUFFAGE, VENTILATION ET/OU CLIMATISATION CORRESPONDANTE**
DÄMPFERTÜR UND ZUGEHÖRIGE HEIZUNGS-, LÜFTUNGS- UND/ODER KLIMAANLAGE
DAMPER DOOR, AND CORRESPONDING HEATING, VENTILATION AND/OR AIR CONDITIONING INSTALLATION

(30) Priorité: 08.02.2017 FR 1751042
(43) Date de publication de la demande: 18.12.2019
(73) Titulaire: Valeo Systemes Thermiques, 78322 Le Mesnil Saint-Denis Cedex (FR)
(72) Inventeur: PIERRES, Philippe, 78322 Le Mesnil Saint-Denis Cedex (FR); VARELA, Nestor, 78322 Le Mesnil Saint-Denis Cedex (FR); CAVAGNA, Pauline, 78322 Le Mesnil Saint-Denis Cedex (FR)
(74) Mandataire: Tran, Chi-Hai
(86) Numéro de dépôt international: PCT/FR2018/050310
(87) Numéro de publication internationale: WO 2018/146425

(56) Documents cités:
- EP-A1- 2 631 098
- WO-A1-2015/071340
- CN-U- 205 641 415
- DE-A1-102014 211 704
- FR-A1- 2 959 167
- JP-A- 2008 273 234

## Description

La présente invention concerne le domaine des installations de chauffage, ventilation et/ou climatisation. Plus particulièrement, l'invention concerne le domaine des volets d'obturation de flux d'air destinés à équiper de telles installations.

Dans le domaine automobile, il est fréquent d'équiper un véhicule d'une installation de chauffage, ventilation et/ou de climatisation pour réguler les paramètres aérothermiques de l'air contenu dans l'habitacle du véhicule en distribuant de l'air dans l'habitacle du véhicule. Une telle installation est également désignée par l'abréviation HVAC pour « Heating Ventilation and Air Conditioning » en anglais (chauffage, ventilation et conditionnement d'air en français). De nos jours, l'utilisateur d'un véhicule comportant une telle installation peut définir des zones de l'habitacle où il souhaite que l'installation de chauffage, ventilation et/ou climatisation propulse de l'air. A cet effet, de telles installations sont équipées de volets d'obturation, également appelés organes de régulation d'un flux d'air.

Les volets d'obturation présentent généralement deux fonctions principales : assurer la distribution de l'air lorsqu'il entre et dans l'habitacle selon les préférences de l'utilisateur du véhicule d'une part, et contribuer à l'étanchéité des conduites d'air d'autre part.

Ces volets d'obturation sont soumis à deux forces principales : la pression de l'air circulant dans l'installation de chauffage, ventilation et/ou climatisation et des forces de torsion lorsque les volets d'obturation empêchent le flux d'air de sortir vers l'habitacle du véhicule selon les préférences de l'utilisateur par exemple.

Actuellement, le poids et la taille de tels volets d'obturation sont deux critères importants. En effet, dans le but de réduire les consommations énergétiques des véhicules, il est nécessaire d'optimiser le poids de chacun de ses composants. Cette optimisation du poids entraîne généralement la réduction des tailles et de l'épaisseur des différents composants, cette réduction de la taille ou de l'épaisseur devant se faire sans préjudice à la fiabilité et à la résistance des composants. Enfin, un dernier critère important réside dans les coûts de fabrication d'une telle installation et donc dans les coûts de fabrication de chacun des composants de celle-ci, cette réduction des coûts devant se faire sans préjudice à la qualité et à la fiabilité de l'installation de chauffage, ventilation et/ou climatisation.

De manière générale, le volet d'obturation doit être suffisamment rigide pour résister à la pression de l'air provoquée par l'utilisation de l'installation de chauffage, ventilation et/ou climatisation. En effet, si le volet se plie, cela peut provoquer des fuites d'air indésirables dans l'installation. D'autre part, le volet d'obturation ne doit pas se déformer ou encore se rompre sous l'effet des forces de torsion. Afin de prévenir ces inconvénients, les volets d'obturation comprennent généralement des parties de renfort. Cependant, ces parties de renfort ont un impact sur le poids, sur la taille, ou encore sur les coûts de production de tels volets d'obturation.

On connaît du document EP 1826043, un volet d'obturation présentant une forme ondulée, notamment constituée par des éléments de renfort perpendiculaires à l'axe de rotation du volet d'obturation.

Cependant, la rigidité de ce volet d'obturation peut être améliorée afin qu'il puisse présenter une meilleure résistance notamment aux efforts de torsion.

On connaît également du document US 2014/0261822, un volet d'obturation dont la rigidité a été améliorée afin de mieux résister aux différentes forces auxquelles il va être soumis. Ce volet d'obturation présente une forme ondulée et des sections parallèles et d'autres perpendiculaires à l'axe de rotation de celui-ci afin de lui conférer une meilleure rigidité.

Cependant, un tel volet d'obturation présente une certaine complexité car sa rigidité lui est conférée par l'intersection de différentes sections. Il semble également présenter un coût de fabrication assez élevé. Par ailleurs, un tel volet d'obturation semble être dépendant de l'installation de ventilation, chauffage et/ou climatisation dans lequel il est destiné à être installé. Il semble donc nécessaire d'effectuer des plans d'expérience assez longs et complexes pour déterminer les tailles et les dimensions des différentes sections afin de mettre au point un tel volet d'obturation pour différentes installation de chauffage, ventilation et/ou climatisation présentant des tailles diverses et variées. Ainsi, un tel volet d'obturation ne semble pas pouvoir permettre de limiter les coûts de fabrication, ni même une réduction du poids d'une telle installation.

On connaît également du document EP 2631098 , un volet d'obturation dont l'arbre de rotation présente une forme elliptique et des retraits de matière.

L'invention a donc pour objectif de pallier au moins partiellement les problèmes de l'art antérieur exposés ci-dessus en proposant un volet d'obturation, notamment pour une installation de chauffage, ventilation et/ou climatisation, dont la masse est optimisée et dont la résistance, notamment aux efforts de torsion, est au moins équivalente à celle des volets d'obturation de l'art antérieur.

Un autre objectif de l'invention, indépendant des objectifs précédents, est de proposer un volet d'obturation dont les coûts de production sont optimisés.

A cet effet, pour atteindre au moins un des objectifs précités au moins partiellement, la présente invention, telle que définie dans la revendication 1, a pour objet un volet d'obturation d'un flux d'air présentant un axe de rotation, une première face, et une deuxième face opposée à la première face, lesdites première et deuxième faces du volet d'obturation définissant un plan, ledit volet d'obturation comprenant :
- un arbre de rotation saillant de chaque face du plan défini par les première et deuxième faces du volet d'obturation, et
- au moins une paroi latérale présentant une surface plane de forme sensiblement parallélépipédique agencée radialement à l'arbre de rotation,
caractérisé en ce que l'arbre de rotation présente, dans le plan de l'au moins une paroi latérale, une forme semi-elliptique s'étendant sur ladite au moins une paroi latérale, ladite forme semi-elliptique comportant un grand diamètre confondu avec l'axe de rotation du volet d'obturation et un petit rayon parallèle au plan de l'au moins une paroi latérale, la première face présentant au moins une première rangée de retraits de matière et la deuxième face du volet d'obturation présente au moins une deuxième rangée de retraits de matière, lesdites rangées de retraits de matière étant disposées au niveau de l'arbre de rotation parallèlement à l'axe de rotation du volet d'obturation, lesdits retraits de matière correspondant à des orifices borgnes, caractérisé en ce que l'arbre de rotation présente en outre au moins une nervure longitudinale disposée sensiblement au centre des retraits de matière et parallèle au grand diamètre de l'arbre de rotation, l'arbre de rotation présentant une première rangée de retraits de matière comprenant une première nervure longitudinale disposée au niveau de l'axe de rotation du volet d'obturation sur la première face du volet d'obturation et une deuxième rangée de retraits de matière comprenant une deuxième nervure longitudinale sur la deuxième face du volet d'obturation de manière décalée à l'axe de rotation du volet d'obturation.

La présence de l'arbre de rotation de forme semi-elliptique, autrement dit l'arbre de rotation présente une surface en forme de semi-ellipse, permet d'obtenir un volet d'obturation d'épaisseur minimale tout en conservant une bonne résistance aux forces que ledit volet d'obturation va subir de manière intrinsèque à son utilisation, comme par exemple des forces de torsion, ou encore liées à la pression de l'air circulant dans le conduit de ventilation.

L'obtention d'un volet d'épaisseur minimale permet de réduire la masse de celui-ci par rapport aux volets d'obturation connus. Cela permet donc de diminuer la masse de l'installation de chauffage, ventilation et/ou climatisation comportant de tels volets d'obturation.

De plus, la forme de l'arbre de rotation permet de prévenir les risques de déformations ou de ruptures du volet d'obturation afin de conserver un état de fonctionnement optimal de l'installation de chauffage, ventilation et/ou climatisation grâce à une bonne répartition de ces forces sur l'arbre de rotation.

Le volet d'obturation selon la présente invention peut comporter en outre une ou plusieurs des caractéristiques suivantes prise seule ou en combinaison.

Le grand diamètre de l'arbre de rotation est compris entre 65 % et 100 % de la longueur totale du volet d'obturation, de préférence compris entre 80 % et 100 % de la longueur totale du volet d'obturation, et le petit rayon de l'arbre de rotation est compris entre 50 % et 100 % de la largeur totale du volet d'obturation.

La première rangée de retraits de matière et la deuxième rangée de retraits de matière sont disposées en alternance sur la première face et sur la deuxième face du volet d'obturation.

Selon une variante, les retraits de matière présentent une profondeur supérieure ou égale à 50 % de l'épaisseur de l'arbre de rotation, et de préférence comprise entre 75 et 95 % de l'épaisseur de l'arbre de rotation.

Selon une variante, la nervure longitudinale présente une hauteur égale à l'épaisseur de l'arbre de rotation à son emplacement.

Selon un mode de réalisation particulier, la au moins une paroi latérale comprend au moins une nervure radiale s'étendant perpendiculairement à l'axe de rotation dudit volet d'obturation, ladite nervure radiale prenant naissance au niveau d'une extrémité périphérique de la paroi latérale opposée à l'axe de rotation du volet d'obturation et s'étendant jusqu'à la périphérie de l'arbre de rotation.

Selon une variante de ce mode de réalisation, la au moins une paroi latérale présente au moins trois nervures radiales équidistantes les unes des autres.

De manière alternative, le volet d'obturation comporte deux parois latérales et l'arbre de rotation de forme semi-elliptique s'étendant sur chacune des parois latérales de part et d'autre de l'axe de rotation du volet d'obturation.

Selon cette alternative, les première et deuxième faces du volet d'obturation présentent chacune une symétrie axiale par rapport au grand diamètre de l'arbre de rotation.

Selon un mode de réalisation particulier, les retraits de matière présentent une forme sensiblement parallélépipédique, et de préférence une forme de losange.

La présente invention a également pour objet une installation de chauffage, ventilation et/ou climatisation caractérisée en ce qu'elle comprend au moins un volet d'obturation tel que défini précédemment.

D'autres caractéristiques et avantages de la présente invention apparaîtront plus clairement à la lecture de la description suivante, donnée à titre d'exemple illustratif et non limitatif, ainsi que des dessins annexés dans lesquels :
- la figure 1A est une représentation schématique de dessus d'une première face d'un volet d'obturation présentant une seule paroi latérale selon un premier mode de réalisation,
- la figure 1B est une représentation schématique de dessus d'une deuxième face du volet d'obturation de la figure 1A,
- la figure 2A est une représentation schématique de dessus d'une première face d'un volet d'obturation présentant deux parois latérales selon un deuxième mode de réalisation,
- la figure 2B est une représentation schématique de dessus d'une deuxième face du volet d'obturation de la figure 2A,
- la figure 2C est une représentation schématique en coupe transversale selon un premier plan de coupe et en perspective du volet d'obturation de la figure 2A,
- la figure 2D est une représentation schématique en coupe transversale selon un deuxième plan de coupe et en perspective du volet d'obturation de la figure 2A,
- la figure 3A est une représentation schématique de dessus d'une première face d'un volet d'obturation selon un troisième mode de réalisation,
- la figure 3B est une représentation schématique de dessus d'une deuxième face du volet d'obturation de la figure 3A,
- la figure 3C est une représentation schématique en perspective de la première face du volet d'obturation de la figure 3A,
- la figure 4A est une représentation schématique de dessus d'une première face d'un volet d'obturation selon un quatrième mode de réalisation,
- la figure 4B est une représentation schématique de dessus d'une deuxième face du volet d'obturation de la figure 4A, et
- la figure 4C est une représentation schématique en perspective de la première face du volet d'obturation de la figure 4A.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à une première et à une deuxième face du volet d'obturation, à une première et une deuxième nervures longitudinales, à une première et une deuxième rangée de retraits de matière, ou encore à un premier et à un deuxième plan de coupe. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier le fonctionnement du volet d'obturation.

Dans la description suivante, on entend par :
- axe de rotation, un axe de rotation physique du volet d'obturation tournant autour d'un axe de rotation imaginaire,
- longueur totale du volet, la longueur constituée par la longueur de la paroi latérale du volet d'obturation comprenant un cadre périphérique et éventuellement un joint d'étanchéité de part et d'autre ; cette longueur de la paroi latérale est parallèle à l'axe de rotation du volet d'obturation,
- largeur totale du volet, la largeur constituée par la largeur de la paroi latérale du volet d'obturation, la largeur du cadre périphérique, et la largeur du joint d'étanchéité éventuel, cette largeur de la paroi latérale est perpendiculaire à l'axe de rotation du volet d'obturation,
- côté latéral de la paroi latérale, le côté de la paroi latérale perpendiculaire à l'axe de rotation du volet d'obturation,
- côté longitudinal de la paroi latérale, le côté extérieur de la paroi latérale parallèle à l'axe de rotation du volet d'obturation,
- angle d'extrémité de la paroi latérale, l'angle formé par le côté latéral et le côté longitudinal du volet d'obturation,
- plan de la paroi latérale, le plan comprenant la paroi latérale et l'axe de rotation imaginaire du volet d'obturation, et
- symétrique, une symétrie par rapport à un plan passant par l'axe de rotation et perpendiculaire au plan défini par la toile du volet d'obturation.

### Premier exemple de réalisation :

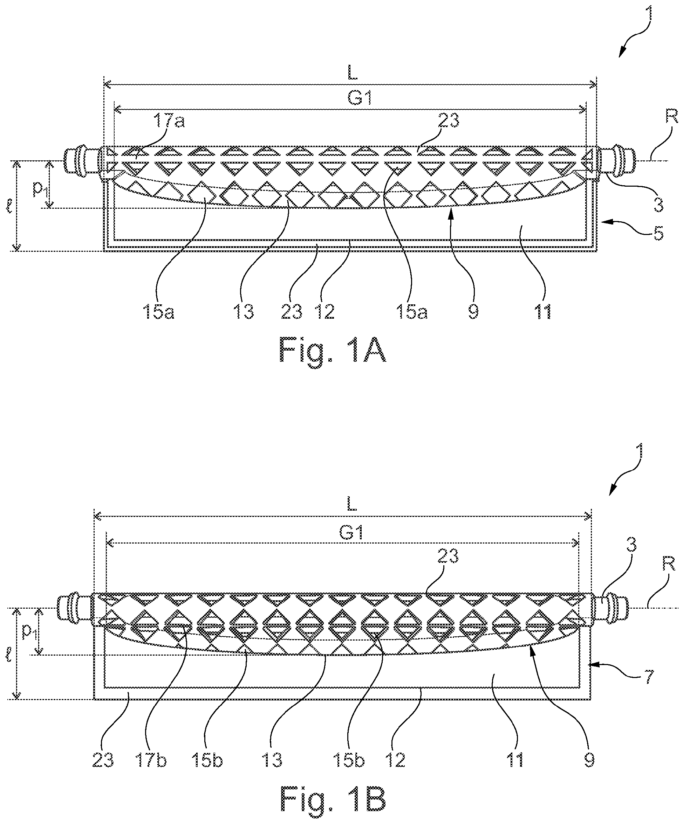

En référence aux figures 1A et 1B, il est représenté un volet d'obturation 1 d'un flux d'air présentant un axe de rotation 3 tournant autour d'un axe de rotation imaginaire R, une première face 5 (figure 1A), et une deuxième face 7 (figure 1B) opposée à la première face 5. Selon cet exemple, les première 5 et deuxième 7 faces du volet d'obturation 1 définissent un plan.

De plus, le volet d'obturation 1 comprend en outre un arbre de rotation 9 saillant par rapport à chaque face du plan défini par les première 5 et deuxième 7 faces du volet d'obturation 1, et au moins une paroi latérale 11 présentant une surface plane de forme sensiblement parallélépipédique agencée radialement à l'arbre de rotation 9. Selon cet exemple, la paroi latérale 11 présente une forme rectangulaire et comprend un cadre périphérique 12 sur lequel est disposé de manière optionnelle un joint d'étanchéité 23. Le joint d'étanchéité 23 est configuré pour limiter au maximum les pertes aérauliques qui peuvent se produire afin d'augmenter l'efficacité du volet d'obturation 1. En effet, le volet d'obturation 1 a pour fonction de fermer ou non une conduite d'air de l'installation de chauffage, ventilation et/ou climatisation. La présence de ce joint d'étanchéité 23 permet d'améliorer cette fonction d'obturation. Selon le mode de réalisation particulier représenté ici, le volet d'obturation 1 présente une seule paroi latérale 11. Un tel volet d'obturation 1 peut également être appelé volet drapeau.

Selon le mode de réalisation représenté ici, l'arbre de rotation 9 présente, dans le plan de l'au moins une paroi latérale 11, une forme semi-elliptique 13 s'étendant sur ladite au moins une paroi latérale 11. Ladite forme semi-elliptique 13 comporte un grand diamètre G1 confondu avec l'axe de rotation 3 du volet d'obturation 1 et un petit rayon P1 parallèle au plan de l'au moins une paroi latérale 11. La forme semi-elliptique 13 de l'arbre de rotation 9 permet d'augmenter la résistance du volet d'obturation 1 aux efforts de torsion, liés au flux d'air que le volet d'obturation 1 empêche de passer, par exemple qu'il peut être amené à subir de manière intrinsèque à son utilisation. La présence de cet arbre de rotation 9 de forme semi-elliptique 13 permet de diminuer l'épaisseur de la paroi latérale 11 et donc la masse du volet d'obturation 1 tout en permettant à la paroi latérale 11 de conserver une rigidité au moins équivalente à celle des parois latérales des volets d'obturation connus de l'art antérieur. L'intégrité structurelle du volet d'obturation 1 est donc préservée car sa résistance aux différentes forces qu'il peut être amené à subir est au moins équivalente à celle des volets d'obturation connus de l'art antérieur.

Selon le mode de réalisation particulier des figures 1A et 1B, le grand diamètre G1 de l'arbre de rotation 9 est compris entre 65 % et 100 % de la longueur totale L du volet d'obturation 1, et plus particulièrement entre 80 % et 100 % de la longueur totale L du volet d'obturation 1, et le petit rayon P1 de l'arbre de rotation 9 est compris entre 50 % et 100 % de la largeur totale 1 du volet d'obturation 1. Les dimensions de l'arbre de rotation 9 sont importantes pour que le volet d'obturation 1 puisse résister aux différentes forces qu'il va subir lors de son utilisation. En effet, si les dimensions de la forme semi-elliptique 13 composant l'arbre de rotation 9 sont inférieures à 65 % de la longueur totale L et 50 % de la largeur totale 1 du volet d'obturation 1, le volet d'obturation 1 risque de se plier ou de se rompre. Dans un tel cas, il ne peut plus remplir son rôle d'obturation d'une conduite d'air de l'installation de chauffage, ventilation et/ou climatisation car il présente des pertes aérauliques importantes.

Selon le mode de réalisation particulier représenté ici, la première face 5 comporte au moins une première rangée de retraits de matière 15a et la deuxième face 7 du volet d'obturation 1 présente au moins une deuxième rangée de retraits de matière 15b disposées au niveau de l'arbre de rotation 9 parallèlement à l'axe de rotation 3 du volet d'obturation 1. Les retraits de matière 15a, 15b correspondent à des orifices borgnes. Selon ce mode de réalisation particulier, la première face 5 présente deux premières rangées de retraits de matière 15a (figure 1A) dont une est disposée au niveau de l'axe de rotation imaginaire R et l'autre est disposée au niveau de la périphérie de l'arbre de rotation 9. La deuxième face 7 présente quant à elle une deuxième rangée de retraits de matière 15b (figure 1B) disposée sensiblement au centre de la forme semi-elliptique 13 de l'arbre de rotation 9. Ces retraits de matière 15a, 15b au niveau de l'arbre de rotation 9 permettent de diminuer la masse du volet d'obturation 1 tout en permettant à celui-ci de conserver une bonne résistance aux différentes forces qu'il peut être amené à subir par la présence de l'arbre de rotation 9 saillant de la paroi latérale 11.

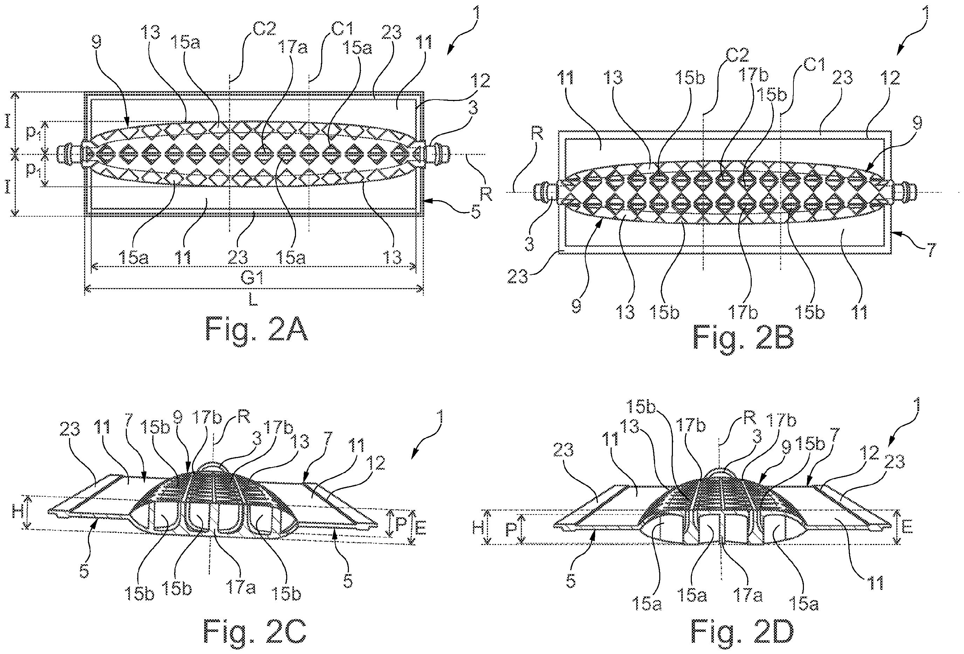

Selon le mode de réalisation particulier représenté ici, les retraits de matière 15a, 15b sont disposés en alternance sur la première face 5 et sur la deuxième face 7 du volet d'obturation 1. Plus précisément les rangées de retraits de matière 15a de la première face 5 et les rangées de retraits de matière 15b de la deuxième face 7 sont disposées de manière décalée les unes par rapport aux autres sur les faces 5, 7 du volet d'obturation 1, comme cela est représenté plus en détail en référence aux figures 2C et 2D. Par ailleurs, les retraits de matière 15a, 15b présentent une profondeur P supérieure ou égale à 50 % de l'épaisseur E de l'arbre de rotation 9, et de préférence comprise entre 75 et 95 % de l'épaisseur E de l'arbre de rotation 9, comme cela est également représenté en référence aux figures 2C et 2D.

Selon le mode de réalisation particulier des figures 1A et 1B et de manière optionnelle, l'arbre de rotation 9 présente en outre au moins une nervure longitudinale 17 disposée sensiblement au centre des retraits de matière 15a, 15b et parallèle au grand diamètre G1 de l'arbre de rotation 9. Plus précisément, l'arbre de rotation 9 présente une première rangée de retraits de matière 15a comprenant une première nervure longitudinale 17a disposée au niveau de l'axe de rotation 3 du volet d'obturation 1 sur la première face 5 du volet d'obturation 1 (figure 1A) et une deuxième rangée de retraits de matière 15b comprenant une deuxième nervure longitudinale 17b disposée sur la deuxième face 7 du volet d'obturation 1 de manière décalée à l'axe de rotation 3 du volet d'obturation 1 (figure 1B). La présence de ces première 17a et deuxième 17b nervures longitudinales permet également de contribuer à l'augmentation de la résistance du volet d'obturation 1 aux différentes forces qu'il peut être amené à subir, et notamment aux efforts de torsion.

Ainsi, un tel volet d'obturation 1 de type drapeau peut être utilisé pour obturer ou non des conduits de ventilation dans une installation de chauffage, ventilation et/ou climatisation afin de permettre de diminuer sa masse générale sans porter préjudice au bon fonctionnement de cette installation.

### Deuxième exemple de réalisation :

En référence aux figures 2A à 2D, il est représenté un volet d'obturation 1 comportant deux parois latérales 11 et un arbre de rotation 9 de forme semi-elliptique 13 pour chaque parois latérales 11 s'étendant de part et d'autre de l'axe de rotation 3 du volet d'obturation 1. L'arbre de rotation 9 présente ici une forme d'ellipse étant donné qu'il y a deux parois latérales 11 et que l'arbre de rotation 9 présente une forme, ou surface en forme, semi-elliptique 13 pour chaque paroi latérale 11. On peut également envisager un volet d'obturation 1 comportant deux parois latérales 11 et un arbre de rotation 9 de forme semi-elliptique 13 pour les deux parois latérales 11. Un tel volet d'obturation 1 peut également être appelé volet papillon. L'utilisation d'un tel volet d'obturation 1, lors du fonctionnement de l'installation de ventilation, chauffage et/ou climatisation, peut permettre d'obturer de manière alternative différentes entrées ou sorties d'air. Le volet d'obturation 1 selon ce deuxième exemple comprend les mêmes éléments que le volet drapeau décrit précédemment. Afin de ne pas surcharger la description, seuls les éléments supplémentaires sont décrits ici.

Selon ce deuxième mode de réalisation, les première 5 et deuxième 7 faces du volet d'obturation 1 présentent chacune une symétrie axiale par rapport au grand diamètre G1 de l'arbre de rotation 9 du volet d'obturation 1. Par ailleurs, les retraits de matière 15a, 15b présentent une forme sensiblement parallélépipédique, et plus particulièrement une forme de losange selon cet exemple de réalisation.

Selon ce deuxième mode de réalisation, la première face 5 présente une première nervure longitudinale 17a et la deuxième face 7 du volet d'obturation 1 présente deux deuxièmes nervures longitudinales 17b disposées de part et d'autre de l'axe de rotation 3 du volet d'obturation 1.

En référence aux figures 2C et 2D, il est représenté le volet d'obturation 1 en coupe transversale selon ce deuxième exemple de réalisation. Plus précisément, la figure 2C correspond à la coupe transversale du volet d'obturation selon un premier plan de coupe C1 (visible sur les figures 2A et 2B). Le premier plan de coupe C1 passe au milieu des retraits de matière 15a de la première face 5 du volet d'obturation 1 parallèlement au petit rayon P1 de la forme semi-elliptique 13 de l'arbre de rotation 9. Par ailleurs, la figure 2D correspond à la coupe transversale du volet d'obturation 1 selon un deuxième plan de coupe C2 (visible sur les figures 2A et 2B). Le deuxième plan de coupe C2 passe au milieu des retraits de matière 15b de la deuxième face 7 du volet d'obturation 1 parallèlement au petit rayon P1 de la forme semi-elliptique 13 de l'arbre de rotation 9. Ces figures 2C et 2D permettent de mieux illustrer la disposition en alternance des retraits de matière 15a, 15b sur les première 5 et deuxième 7 faces du volet d'obturation 1 ainsi que leurs dimensions et les dimensions des nervures longitudinales 17 présentes également sur les première 5 et deuxième 7 faces du volet d'obturation 1.

En référence aux figures 2C et 2D, les retraits de matière 15a (visibles sur la figure 2D) de la première face 5 sont disposés en alternance par rapport aux retraits de matière 15b (visibles sur la figure 2C). Par alternance, on entend ici que les retraits de matière 15a de la première face 5 ne se chevauchent pas avec les retraits de matière 15b de la deuxième face 7. Plus précisément, les retraits de matière 15a de la première face 5 et les retraits de matière 15b de la deuxième face 7 sont disposés sur l'arbre de rotation 9 de manière décalée les uns par rapport aux autres sur la largeur 1 du volet d'obturation 1.

Par ailleurs, selon le mode de réalisation particulier représenté ici, les retraits de matière 15a, 15b présentent une profondeur P comprise entre 75 et 95 % de l'épaisseur E de l'arbre de rotation 9 au niveau de l'axe de rotation 3. Avantageusement, les retraits de matière 15a, 15b permettent de réduire au plus la masse du volet d'obturation 1 sans porter préjudice à la résistance du volet d'obturation 1 aux différentes forces qu'il va subir du fait de son utilisation. Selon l'exemple de réalisation particulier représenté ici, l'arbre de rotation 9 au niveau du fond des retraits de matière 15a, 15b présente une épaisseur sensiblement égale à l'épaisseur de la paroi latérale 11 du volet d'obturation 1.

De plus, les nervures longitudinales 17 présentent de préférence une hauteur H égale à l'épaisseur E de l'arbre de rotation 9 à leur emplacement.

### Troisième exemple de réalisation :

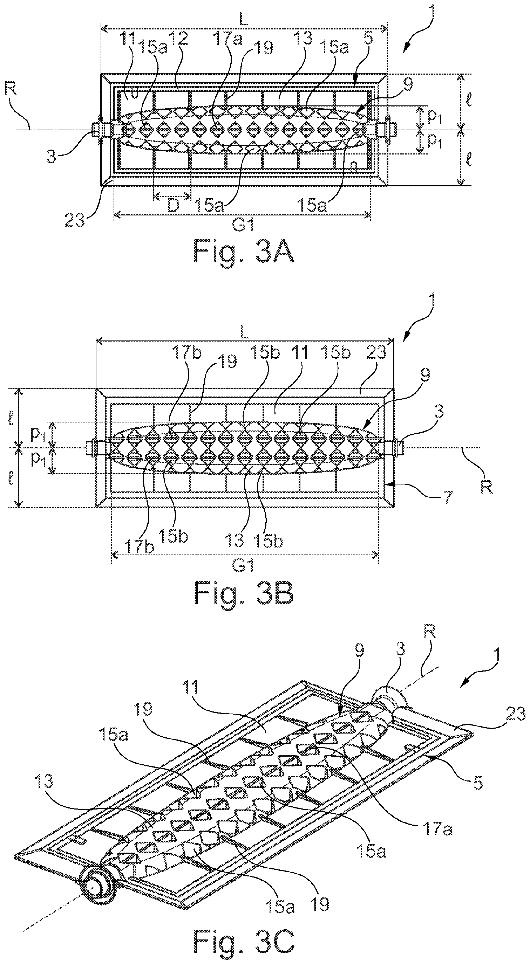

En référence aux figures 3A à 3C, il est représenté un volet d'obturation 1 de type papillon. Dans ce troisième mode de réalisation, l'ensemble des éléments figurant dans le deuxième mode de réalisation décrit ci-dessus sont présents. Afin de ne pas surcharger la description, seuls les éléments supplémentaires sont décrits ici.

Selon cet exemple, chaque paroi latérale 11 comprend de manière optionnelle au moins une nervure radiale 19 s'étendant perpendiculairement à l'axe de rotation 3 dudit volet d'obturation 1. Cette nervure radiale 19 prend naissance au niveau d'une extrémité périphérique de la paroi latérale 11 opposée à l'axe de rotation 3 du volet d'obturation 1, et plus précisément au niveau du cadre périphérique 12 de la paroi latérale 11. La nervure radiale 19 s'étend jusqu'à la périphérie de la forme semi-elliptique 13 de l'arbre de rotation 9. Selon le mode de réalisation particulier décrit ici, chaque paroi latérale 11 présente une pluralité de nervures radiales 19 équidistantes les unes des autres et séparées par une distance D. Selon le mode de réalisation préféré représenté ici, le volet d'obturation 1 présente six nervures radiales 19 équidistantes les unes des autres. Cette répartition des différentes nervures radiales 19 permet une bonne répartition des forces de torsion par exemple sur chaque nervure radiale 19 en complément de la répartition des forces qui s'effectue sur l'arbre de rotation 9, ce qui contribue à la rigidification des parois latérales 11 et donc à la rigidification du volet d'obturation 1. Cette répartition des nervures radiales 19 contribue donc à l'augmentation de la résistance, notamment aux forces de torsion, du volet d'obturation 1.

En référence à la figure 3C, les nervures radiales 19 présentent une épaisseur variable par rapport au plan défini par la paroi latérale 11. Plus précisément, les nervures radiales 19 présentent une épaisseur sensiblement égale à celle du cadre périphérique 12 au niveau de son extrémité en contact avec le cadre périphérique 12 de la paroi latérale 11 et une épaisseur sensiblement égale à celle de l'arbre de rotation 9, au niveau de la périphérie de la forme semi-elliptique 13, au niveau de son extrémité en contact avec la périphérie de l'arbre de rotation 9. Cette variabilité de l'épaisseur des nervures radiales 19 contribue également à l'augmentation de la rigidité des parois latérales 11 du volet d'obturation 1.

Selon un autre mode de réalisation non représenté ici, les nervures radiales 19 sont disposées sur la première 5 et la deuxième 7 faces d'un volet d'obturation 1 de type drapeau, c'est-à-dire ne présentant qu'une seule paroi latérale 11. Selon ce mode de réalisation, le volet d'obturation 1 présente une pluralité de nervures radiales 19 équidistantes les unes des autres.

Selon un autre mode de réalisation non représenté ici, les nervures radiales 19 présentent une épaisseur constante sur l'ensemble de la paroi latérale 11. Cette épaisseur constant peut par exemple correspondre à l'épaisseur du cadre périphérique 12.

### Quatrième exemple de réalisation :

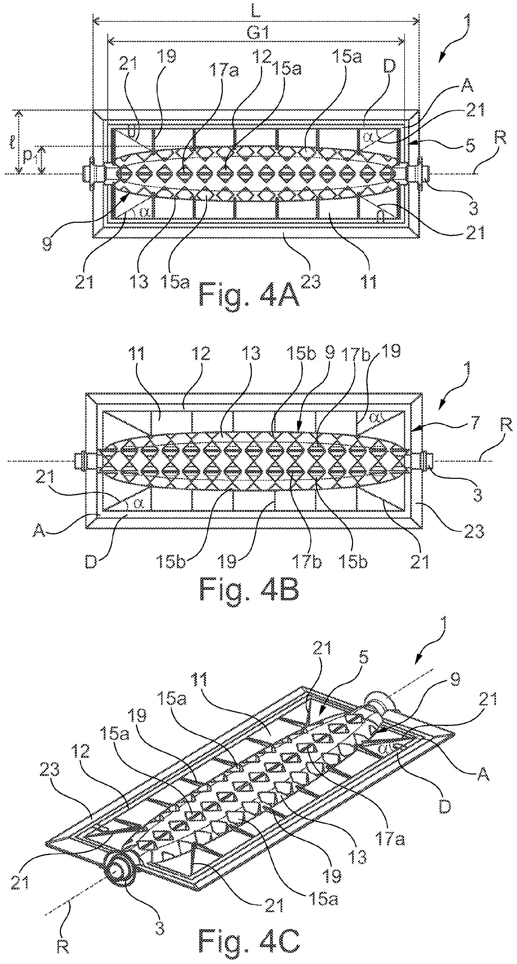

En référence aux figures 4A à 4C, il est représenté un volet d'obturation 1 de type papillon. Dans ce quatrième mode de réalisation, l'ensemble des éléments du troisième mode de réalisation décrit ci-dessus sont présents. Comme précédemment, de manière à ne pas surcharger la description, seuls les éléments supplémentaires sont décrits ici.

Selon cet exemple les première 5 et deuxième 7 faces de la paroi latérale 11 présentent de manière optionnelle deux nervures diagonales 21. Chaque nervure diagonale 21 s'étend depuis un angle d'extrémité A de la paroi latérale 11 vers l'axe de rotation 3 du volet d'obturation 1 et forme un angle α compris entre 20° et 60° avec un côté longitudinal D de la paroi latérale 11. Selon le mode de réalisation particulier représenté ici, les nervures diagonales 21 s'étendent jusqu'au croisement de la nervure radiale 19 la plus proche de l'angle d'extrémité A duquel est issue la nervure diagonale 21 et la périphérie de l'arbre de rotation 9.

Avantageusement, la présence d'une nervure diagonale 21 à chaque angle d'extrémité A de la paroi latérale 11 sur la première face 5 et sur la deuxième face 7 du volet d'obturation 1 permet de rigidifier les angles d'extrémité A de la paroi latérale 11 lorsqu'elle est soumise à de fortes pressions par exemple de manière à ce qu'elle ne soit pas amenée à se tordre ou à se plier. Ainsi, les nervures diagonales 21 contribuent également à l'augmentation de la rigidité du volet d'obturation 1 et donc à sa résistance aux différentes forces qu'il peut subir du fait de son utilisation dans une installation de ventilation, chauffage et/ou climatisation.

En référence à la figure 4C, les nervures diagonales 21, tout comme les nervures radiales 19, présentent une épaisseur variable par rapport au plan de la paroi latérale 11. Plus précisément, les nervures diagonales 21 présentent une épaisseur sensiblement égale à l'épaisseur du cadre périphérique 12 au niveau de l'angle d'extrémité A de la paroi latérale 11 et une épaisseur sensiblement égale à celle de l'arbre de rotation 9 au niveau de son croisement avec la nervure radiale 19. Cette variabilité de l'épaisseur des nervures diagonales 21 contribue également à l'augmentation de la résistance, notamment aux efforts de torsion, des parois latérales 11 et donc à l'augmentation de la rigidité du volet d'obturation 1.

Selon un autre mode de réalisation non représenté ici, le volet d'obturation 1 présente deux parois latérales 11 sur lesquelles seules les nervures diagonales 21 sont présentes.

Selon encore un autre mode de réalisation non représenté ici, les nervures diagonales 21 présentent une épaisseur constante. Cette épaisseur constant peut par exemple être égale à l'épaisseur du cadre périphérique 12 de la paroi latérale 11.

Selon une variante non représentée ici, le volet d'obturation 1 correspond à un volet de type drapeau. Selon cette variante, le volet d'obturation 1 présente sur ses première 5 et deuxième face 7 une nervure diagonale 21 disposée au niveau des angles d'extrémité A de la paroi latérale 11. Selon cette variante, les nervures radiales 19 peuvent être présentes ou absentes.

Ces exemples de réalisation sont fournis à titre d'exemples illustratifs et non limitatifs. En effet, il est tout à fait possible pour l'homme de l'art sans sortir du cadre de la présente invention de modifier la forme géométrique des retraits de matière, pour leur faire adopter toute autre forme qu'une forme sensiblement parallélépipédique, comme par exemple des formes circulaires. De même l'homme de l'art pourra utiliser un volet d'obturation ne présentant des nervures radiales ou diagonales que sur une seule face du volet d'obturation afin d'obtenir un volet d'obturation présentant des propriétés de résistance aux différentes contraintes améliorées, ou même concevoir un volet d'obturation présentant une symétrie par rapport à l'axe de rotation pour les retraits de matière mais pas pour les nervures diagonales ou radiales.

Ainsi, la diminution de la masse d'un volet d'obturation 1 tout en lui permettant de conserver une bonne résistance aux forces qu'il subit lors de son utilisation, comme des forces de pression ou encore de torsion par exemple, est possible grâce au volet d'obturation 1 tel que décrit ci-dessus.

## Revendications

1. Volet d'obturation (1) d'un flux d'air présentant un axe de rotation (3), une première face (5), et une deuxième face (7) opposée à la première face (5), lesdites première (5) et deuxième (7) faces du volet d'obturation (1) définissant un plan ledit volet d'obturation (1) comprenant :
• un arbre de rotation (9) saillant de chaque face du plan défini par les première (5) et deuxième (7) faces du volet d'obturation (1), et
• au moins une paroi latérale (11) présentant une surface plane de forme sensiblement parallélépipédique agencée radialement à l'arbre de rotation (9),
l'arbre de rotation (9) présentant, dans le plan de l'au moins une paroi latérale (11), une forme semi-elliptique (13) s'étendant sur ladite au moins une paroi latérale (11), ladite forme semi-elliptique (13) comportant un grand diamètre (G1) confondu avec l'axe de rotation (3) du volet d'obturation (1) et un petit rayon (P1) parallèle au plan de l'au moins une paroi latérale (11),
la première face (5) présentant au moins une première rangée de retraits de matière (15a) et la deuxième face (7) du volet d'obturation (1) présente au moins une deuxième rangée de retraits de matière (15b), lesdites rangées de retraits de matière (15a, 15b) étant disposées au niveau de l'arbre de rotation (9) parallèlement à l'axe de rotation (3) du volet d'obturation (1), lesdits retraits de matière (15a, 15b) correspondant à des orifices borgnes,
**caractérisé en ce que** l'arbre de rotation (9) présente en outre au moins une nervure longitudinale (17) disposée sensiblement au centre des retraits de matière (15a, 15b) et parallèle au grand diamètre (G1) de l'arbre de rotation (9), l'arbre de rotation (9) présentant une première rangée de retraits de matière (15a) comprenant une première nervure longitudinale (17a) disposée au niveau de l'axe de rotation (3) du volet d'obturation (1) sur la première face (5) du volet d'obturation (1) et une deuxième rangée de retraits de matière (15b) comprenant une deuxième nervure longitudinale (17b) sur la deuxième face (7) du volet d'obturation (1) de manière décalée à l'axe de rotation (3) du volet d'obturation (1).

2. Volet d'obturation (1) selon la revendication précédente, **caractérisé en ce que**
• le grand diamètre (G1) de l'arbre de rotation (9) est compris entre 65 % et 100 % de la longueur totale (L) du volet d'obturation (1), de préférence compris entre 80 % et 100 % de la longueur totale (L) du volet d'obturation (1), et
• le petit rayon (P1) de l'arbre de rotation (9) est compris entre 50 % et 100 % de la largeur totale (1) du volet d'obturation (1).

3. Volet d'obturation (1) selon l'une des revendications précédentes, **caractérisé en ce que** la première rangée de retraits de matière (15a) et la deuxième rangée de retraits de matière (15b) sont disposées en alternance sur la première face (5) et sur la deuxième face (7) du volet d'obturation (1).

4. Volet d'obturation (1) selon la revendication 3, **caractérisé en ce que** les retraits de matière (15a, 15b) présentent une profondeur (P) supérieure ou égale à 50 % de l'épaisseur (E) de l'arbre de rotation (9), et de préférence comprise entre 75 et 95 % de l'épaisseur (E) de l'arbre de rotation (9).

5. Volet d'obturation (1) selon l'une des revendications 1 à 4, **caractérisé en ce que** la nervure longitudinale (17) présente une hauteur (H) égale à l'épaisseur (E) de l'arbre de rotation (9) à son emplacement.

6. Volet d'obturation (1) selon l'une quelconque des revendications précédentes, **caractérisé en ce que** la au moins une paroi latérale (11) comprend au moins une nervure radiale (19) s'étendant perpendiculairement à l'axe de rotation (3) dudit volet d'obturation (1), ladite nervure radiale (19) prenant naissance au niveau d'une extrémité périphérique de la paroi latérale (11) opposée à l'axe de rotation (3) du volet d'obturation (1) et s'étendant jusqu'à la périphérie de l'arbre de rotation (9).

7. Volet d'obturation (1) selon la revendication 6, **caractérisé en ce que** la au moins une paroi latérale (11) présente au moins trois nervures radiales (19) équidistantes les unes des autres.

8. Volet d'obturation (1) selon l'une quelconque des revendications précédentes, **caractérisé en ce que** le volet d'obturation (1) comporte deux parois latérales (11) et l'arbre de rotation (9) de forme semi-elliptique (13) s'étendant sur chacune des parois latérales (11) de part et d'autre de l'axe de rotation (3) du volet d'obturation (1).

9. Volet d'obturation (1) selon la revendication 8, **caractérisé en ce que** les première (5) et deuxième (7) faces du volet d'obturation (1) présentent chacune une symétrie axiale par rapport au grand diamètre (G1) de l'arbre de rotation (9).

10. Volet d'obturation (1) selon l'une quelconque des revendications 1 à 9, **caractérisé en ce que** les retraits de matière (15a, 15b) présentent une forme sensiblement parallélépipédique, et de préférence une forme de losange.

11. Installation de chauffage, ventilation et/ou climatisation **caractérisée en ce qu'**elle comprend au moins un volet d'obturation (1) selon l'une quelconque des revendications précédentes.

## Patentansprüche

1. Verschlussklappe (1) für einen Luftstrom, welche eine Drehachse (3), eine erste Seite (5) und eine der ersten Seite (5) gegenüberliegende zweite Seite (7) aufweist, wobei die erste (5) und die zweite (7) Seite der Verschlussklappe (1) eine Ebene definieren, wobei die Verschlussklappe (1) umfasst:
• eine Drehwelle (9), die auf jeder Seite der durch die erste (5) und die zweite (7) Seite der Verschlussklappe (1) definierten Ebene vorsteht, und
• wenigstens eine Seitenwand (11), die eine ebene Oberfläche aufweist, von im Wesentlichen parallelepipedförmiger Gestalt, die radial zu der Drehwelle (9) angeordnet ist,
wobei die Drehwelle (9) in der Ebene der wenigstens einen Seitenwand (11) eine halbelliptische Form (13) aufweist, die sich auf der wenigstens einen Seitenwand (11) erstreckt, wobei die halbelliptische Form (13) einen großen Durchmesser (G1), der mit der Drehachse (3) der Verschlussklappe (1) zusammenfällt, und einen kleinen Radius (P1), der zur Ebene der wenigstens einen Seitenwand (11) parallel ist, aufweist,
wobei die erste Seite (5) wenigstens eine erste Reihe von Materialausnehmungen (15a) aufweist und die zweite Seite (7) der Verschlussklappe (1) wenigstens eine zweite Reihe von Materialausnehmungen (15b) aufweist, wobei die Reihen von Materialausnehmungen (15a, 15b) an der Drehwelle (9) parallel zur Drehachse (3) der Verschlussklappe (1) angeordnet sind, wobei die Materialausnehmungen (15a, 15b) Sacköffnungen entsprechen,
**dadurch gekennzeichnet, dass** die Drehwelle (9) außerdem wenigstens eine Längsrippe (17) aufweist, die im Wesentlichen in der Mitte der Materialausnehmungen (15a, 15b) angeordnet und zum großen Durchmesser (G1) der Drehwelle (9) parallel ist, wobei die Drehwelle (9) eine erste Reihe von Materialausnehmungen (15a) aufweist, die eine erste Längsrippe (17a) umfasst, die an der Drehachse (3) der Verschlussklappe (1) auf der ersten Seite (5) der Verschlussklappe (1) angeordnet ist, und eine zweite Reihe von Materialausnehmungen (15b), die eine zweite Längsrippe (17b) umfasst, die auf der zweiten Seite (7) der Verschlussklappe (1) zur Drehachse (3) der Verschlussklappe (1) versetzt angeordnet ist.

2. Verschlussklappe (1) nach dem vorhergehenden Anspruch, **dadurch gekennzeichnet, dass**
• der große Durchmesser (G1) der Drehwelle (9) zwischen 65 % und 100 % der Gesamtlänge (L) der Verschlussklappe (1), vorzugsweise zwischen 80 % und 100 % der Gesamtlänge (L) der Verschlussklappe (1) beträgt, und
• der kleine Radius (P1) der Drehwelle (9) zwischen 50 % und 100 % der Gesamtbreite (1) der Verschlussklappe (1) beträgt.

3. Verschlussklappe (1) nach einem der vorhergehenden Ansprüche, **dadurch gekennzeichnet, dass** die erste Reihe von Materialausnehmungen (15a) und die zweite Reihe von Materialausnehmungen (15b) abwechselnd auf der ersten Seite (5) und auf der zweiten Seite (7) der Verschlussklappe (1) angeordnet sind.

4. Verschlussklappe (1) nach Anspruch 3, **dadurch gekennzeichnet, dass** die Materialausnehmungen (15a, 15b) eine Tiefe (P) aufweisen, die größer oder gleich 50 % der Dicke (E) der Drehwelle (9) ist und vorzugsweise zwischen 75 und 95 % der Dicke (E) der Drehwelle (9) beträgt.

5. Verschlussklappe (1) nach einem der Ansprüche 1 bis 4, **dadurch gekennzeichnet, dass** die Längsrippe (17) eine Höhe (H) aufweist, die gleich der Dicke (E) der Drehwelle (9) an der Stelle ist, wo sie angeordnet ist.

6. Verschlussklappe (1) nach einem der vorhergehenden Ansprüche, **dadurch gekennzeichnet, dass** die wenigstens eine Seitenwand (11) wenigstens eine radiale Rippe (19) umfasst, die sich senkrecht zur Drehachse (3) der Verschlussklappe (1) erstreckt, wobei die radiale Rippe (19) von einem Umfangsende der Seitenwand (11) ausgeht, das der Drehachse (3) der Verschlussklappe (1) gegenüberliegt, und sich bis zum Umfang der Drehwelle (9) erstreckt.

7. Verschlussklappe (1) nach Anspruch 6, **dadurch gekennzeichnet, dass** die wenigstens eine Seitenwand (11) wenigstens drei radiale Rippen (19) aufweist, die voneinander äquidistant sind.

8. Verschlussklappe (1) nach einem der vorhergehenden Ansprüche, **dadurch gekennzeichnet, dass** die Verschlussklappe (1) zwei Seitenwände (11) und die Drehwelle (9) von halbelliptischer Form (13), die sich auf jeder der Seitenwände (11) beiderseits der Drehachse (3) der Verschlussklappe (1) erstreckt, aufweist.

9. Verschlussklappe (1) nach Anspruch 8, **dadurch gekennzeichnet, dass** die erste (5) und die zweite (7) Seite der Verschlussklappe (1) jeweils eine axiale Symmetrie in Bezug auf den großen Durchmesser (G1) der Drehwelle (9) aufweisen.

10. Verschlussklappe (1) nach einem der Ansprüche 1 bis 9, **dadurch gekennzeichnet, dass** die Materialausnehmungen (15a, 15b) eine im Wesentlichen parallelepipedförmige Gestalt und vorzugsweise eine Rautenform aufweisen.

11. Heizungs-, Lüftungs- und/oder Klimaanlage, **dadurch gekennzeichnet, dass** sie wenigstens eine Verschlussklappe (1) nach einem der vorhergehenden Ansprüche umfasst.

## Claims

1. Airflow shut-off flap (1) having a rotation axle (3), a first face (5) and a second face (7) opposite to the first face (5), said first (5) and second (7) faces of the shut-off flap (1) defining a plane, said shut-off flap (1) comprising:
• a rotation shaft (9) projecting on each face of the plane defined by the first (5) and second (7) faces of the shut-off flap (1), and
• at least one lateral wall (11) having a planar surface of substantially parallelepipedal shape arranged radially with respect to the rotation shaft (9),
the rotation shaft (9) having, in the plane of the at least one lateral wall (11), a half-ellipse shape (13) extending along said at least one lateral wall (11), said half-ellipse shape (13) comprising a major diameter (G1) that coincides with the rotation axle (3) of the shut-off flap (1) and a minor radius (P1) parallel to the plane of the at least one lateral wall (11),
the first face (5) having at least one first row of removals of material (15a) and the second face (7) of the shut-off flap (1) has at least one second row of removals of material (15b), said rows of removals of material (15a, 15b) being positioned at the level of the rotation shaft (9) parallel to the rotation axle (3) of the shut-off flap (1), said removals of material (15a, 15b) corresponding to blind orifices,
**characterized in that** the rotation shaft (9) also has at least one longitudinal rib (17) positioned substantially at the centre of the removals of material (15a, 15b) and parallel to the major diameter (G1) of the rotation shaft (9), the rotation shaft (9) having a first row of removals of material (15a) comprising a first longitudinal rib (17a) positioned at the level of the rotation axle (3) of the shut-off flap (1) on the first face (5) of the shut-off flap (1) and a second row of removals of material (15b) comprising a second longitudinal rib (17b) on the second face (7) of the shut-off flap (1) in a manner offset from the rotation axle (3) of the shut-off flap (1) .

2. Shut-off flap (1) according to the preceding claim, **characterized in that**
• the major diameter (G1) of the rotation shaft (9) is comprised between 65% and 100% of the total length (L) of the shut-off flap (1), preferably comprised between 80% and 100% of the total length (L) of the shut-off flap (1), and
• the minor radius (P1) of the rotation shaft (9) is comprised between 50% and 100% of the total width (1) of the shut-off flap (1).

3. Shut-off flap (1) according to either of the preceding claims, **characterized in that** the first row of removals of material (15a) and the second row of removals of material (15b) are arranged in alternation on the first face (5) and on the second face (7) of the shut-off flap (1).

4. Shut-off flap (1) according to Claim 3, **characterized in that** the removals of material (15a, 15b) have a depth (P) greater than or equal to 50% of the thickness (E) of the rotation shaft (9), and preferably comprised between 75 and 95% of the thickness (E) of the rotation shaft (9) .

5. Shut-off flap (1) according to one of Claims 1 to 4, **characterized in that** the longitudinal rib (17) has a height (H) equal to the thickness (E) of the rotation shaft (9) at that point.

6. Shut-off flap (1) according to any one of the preceding claims, **characterized in that** the at least one lateral wall (11) comprises at least one radial rib (19) extending perpendicular to the rotation axle (3) of said shut-off flap (1), said radial rib (19) starting at the level of a peripheral end of the lateral wall (11) opposite to the rotation axle (3) of the shut-off flap (1) and extending as far as the periphery of the rotation shaft (9).

7. Shut-off flap (1) according to Claim 6, **characterized in that** the at least one lateral wall (11) has at least three radial ribs (19) equidistant from one another.

8. Shut-off flap (1) according to any one of the preceding claims, **characterized in that** the shut-off flap (1) comprises two lateral walls (11) and the rotation shaft (9) of half-ellipse shape (13) extending on each of the lateral walls (11) on either side of the rotation axle (3) of the shut-off flap (1).

9. Shut-off flap (1) according to Claim 8, **characterized in that** the first (5) and second (7) faces of the shut-off flap (1) each exhibit axial symmetry with respect to the major diameter (G1) of the rotation shaft (9) .

10. Shut-off flap (1) according to any one of Claims 1 to 9, **characterized in that** the removals of material (15a, 15b) have a substantially parallelepipedal shape, and preferably a diamond shape.

11. Heating, ventilation and/or air conditioning installation, **characterized in that** it comprises at least one shut-off flap (1) according to any one of the preceding claims.
